# EUROPÄISCHE PATENTSCHRIFT

(11) **EP 2 624 177 B1**
(45) Veröffentlichungstag und Bekanntmachung des Hinweises auf die Patenterteilung: **02.04.2014**
(21) Anmeldenummer: 12153479.6
(22) Anmeldetag: 01.02.2012
(51) Int. Cl.: G06F 12/06, G06K 19/077

(54) **USB-Stick**
USB stick
Clé USB

(43) Veröffentlichungstag der Anmeldung: 07.08.2013
(73) Patentinhaber: Siemens Aktiengesellschaft, 80333 München (DE)
(72) Erfinder: Giraud, Rene, 76344 Eggenstein-Leopoldshafen (DE); Gander, Patrik, 76870 Kandel (DE); Paul, Rainer, 76889 Kapsweyer (DE); Schäfer, Reiner, 76676 Graben-Neudorf (DE)

(56) Entgegenhaltungen:
- WO-A2-2005/069100
- US-B1- 7 383 386

## Beschreibung

Die Erfindung betrifft einen USB-Stick zum Anschließen an mit einer USB-Schnittstelle versehene elektronische Geräte, wobei der USB-Stick einen Speicher aufweist.

Ein derartiger USB-Stick ist allgemein bekannt und für unterschiedliche Anwendungen vorgesehen. Beispielsweise werden USB-Sticks in Form von USB-Speichersticks als Massenspeicher zur Hinterlegung unterschiedlicher Betriebssysteme oder sonstiger Daten eingesetzt, wobei für die unterschiedlichen Anwendungen diese USB-Sticks häufig unterschiedlich formatiert sind. Insbesondere für einen Service-Techniker ist das "Handling" dieser vielen Sticks umständlich, zumal der Anwendungsbereich derartiger USB-Sticks sich stets vergrößert bzw. erweitert.

Das Dokument WO 2005 069100 A2 ist ein Beispiel des Stands der Technik.

Der Erfindung liegt daher die Aufgabe zugrunde, einen USB-Stick der eingangs genannten Art zu schaffen, welcher einen Einsatz in unterschiedlichen elektronischen Geräten ermöglicht.

Diese Aufgabe wird durch die im kennzeichnenden Teil des Anspruchs 1 angegebenen Maßnahmen gelöst.

Die Erfindung geht von der Idee aus, virtuelle USB-Sticks auf dem Speicher des USB-Sticks einzurichten, wobei jeder virtuelle USB-Stick für eine Anwendung bzw. für ein elektronisches Gerät vorgesehen ist. Ein virtueller USB-Stick für ein Gerät repräsentiert für dieses Gerät einen eigenständigen USB-Stick, der am USB-Anschluss des Gerätes "sichtbar" bzw. erkannt wird. Alle weiteren virtuellen USB-Sticks sind dagegen für dieses Gerät nicht "sichtbar" und das Gerät kann auf diese weiteren USB-Sticks nicht lesend und/oder schreibend zugreifen.

In einer Ausgestaltung der Erfindung ist vorgesehen, dass der USB-Stick dazu ausgebildet ist, die Informationen in Form von Piktogrammen darzustellen, und dass der USB-Stick zum Darstellen und Auswählen der Piktogramme ein Touch-Screen aufweist. Einem Anwender wird dadurch die Auswahl eines der virtuellen USB-Sticks vereinfacht.

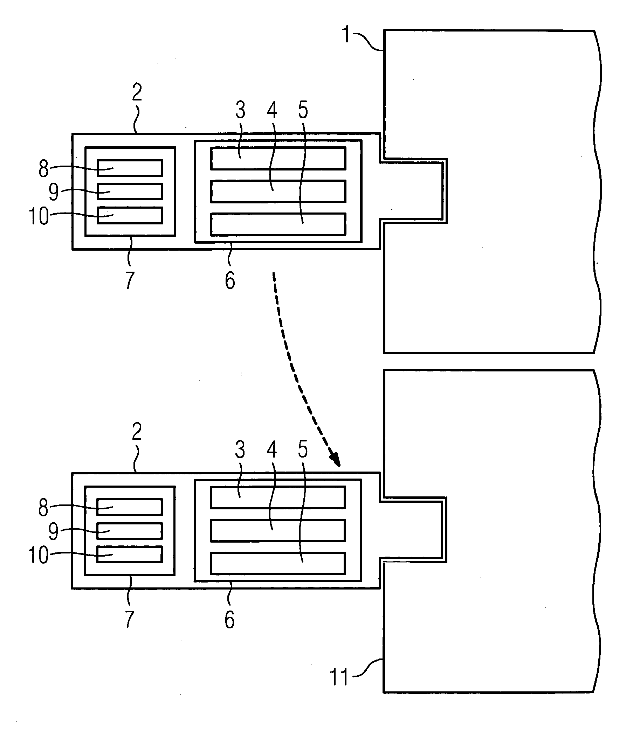

Die Erfindung wird nachfolgend anhand eines Ausführungsbeispiels unter Bezugnahme auf die einzige Figur der Zeichnung näher erläutert. Die Figur der Zeichnung zeigt in stark vereinfachter Form eine Anordnung mit elektronischen Geräten und einem USB-Stick.

Mit 1 ist ein elektronisches Gerät in Form eines Laptops bezeichnet, in welchem ein USB-Stick 2 in einen USB-Anschluss des Laptops 1 gesteckt ist. Der Laptop 1 weist ein hier nicht dargestelltes Programm auf, mittels welchem ein Anwender bzw. Bediener in einer Konfigurations-Betriebsart Bereiche 3, 4, 5 eines Speichers 6 des USB-Sticks 2 für den Einsatz in weiteren elektronischen Geräten bzw. für verschiedene Anwendungen einrichtet. Das Konfigurations-Programm, welches mittels eines hier nicht dargestellten Schalters oder Tasters des USB-Sticks aktiviert wird, kann selbstverständlich passwortgeschützt ausgebildet sein, was bedeutet, dass die Speicherbereiche 3, 4, 5 oder weitere hier nicht dargestellte Speicherbereiche nur dann eingerichtet werden können, falls der Bediener nach einer Aufforderung das richtige Passwort in ein dafür vorgesehenes Eingabefeld auf einer Anzeige des Laptops 1 eingeben kann. Der Speicherbereich 3 ist beispielsweise zur Hinterlegung von Multimedia-Dateien, der Speicherbereich 4 zur Hinterlegung eines Betriebssystems und der Speicherbereich 5 für eine Software oder für sonstige Daten vorgesehen. Die derart mittels des Konfigurations-Programms eingerichteten Speicherbereiche 3, 4, 5 repräsentieren drei virtuelle USB-Sticks, deren Kapazitäten mittels des Konfigurations-Programms selbstverständlich verschieden gewählt werden können. Beispielsweise können die Bereiche 3, 4, 5 als virtuelle 5, 10 oder 20 GByte USB-Sticks verwirklicht werden, wobei die Gesamtkapazität des USB-Sticks 2 selbstverständlich mindestens der Summe der Kapazitäten der virtuellen USB-Sticks entspricht.

Es kann erforderlich sein, die Speicherbereiche 3, 4, 5 bzw. die virtuellen USB-Sticks unterschiedlich zu formatieren, um diese in unterschiedlichen Geräten einsetzen bzw. betreiben zu können.

Für den Fall, dass ein elektronisches Gerät, in welches der USB-Stick eingesetzt werden soll, keine Formatierung des USB-Sticks erfordert, reicht es aus, dass mittels des Konfigurations-Programms auf dem Laptop 1 nur die Größe eines der virtuellen USB-Sticks - z. B. die Größe des Speicherbereiches 4 mit einer Kapazität von 15 GByte - eingerichtet wird. Die Formatierung dieses Speicherbereiches 4 erfolgt dann in diesem Fall mittels eines geeigneten Formatierungs-Programms des elektronischen Gerätes, in welches bzw. welchem der USB-Stick eingesetzt bzw. betrieben werden soll.

Falls dagegen der Zugriff auf einen der Speicherbereiche 3, 4, 5 (virtuellen USB-Stick) des USB-Sticks durch ein elektronisches Gerät nur möglich ist, wenn dieser Bereich bereits geeignet formatiert ist, so richtet der Bediener bzw. Anwender mittels des Konfigurations-Programms auf dem Laptop 1 einen der Speicherbereiche 3, 4, 5 gemäß einer vorgegebenen Größe und gemäß einer durch das elektronische Gerät bestimmten bzw. erforderlichen Formatierung ein, z. B. einer FAT32-Formatierung. Nur dann ist gewährleistet, dass das elektronische Gerät auf diesen derart eingerichteten virtuellen USB-Stick zugreifen kann, falls der USB-Stick in das Gerät gesteckt wird.

Jedem der drei Speicherbereiche 3, 4, 5 ordnet das Konfigurations-Programm ein Piktogramm zu, welches jeweils auf einem Mini-Display, einer OLED-Anzeige, einer elektronischen Papier-Anzeige oder einem Mini-Touch-Screen 7 des USB-Sticks dargestellt bzw. angezeigt wird. Im vorliegenden Ausführungsbeispiel sind den Speicherbereichen 3, 4, 5 Piktogramme 8, 9, 10 zugeordnet, wobei aufgrund einer hier nicht dargestellten wieder aufladbaren Energiequelle des USB-Sticks 2 sichergestellt ist, dass die Piktogramme 8, 9, 10 dem Anwender auch dann noch angezeigt werden, falls der USB-Stick 2 vom Laptop 1 entfernt wurde. Solange der USB-Stick 2 im Laptop 1 oder in einem sonstigen mit einer USB-Schnittstelle versehenen elektronischen Gerät gesteckt ist, wird diese Energiequelle geladen.

Im Folgenden wird angenommen, dass ein Anwender von einer Festplatte des Laptops 1 Dateien eines Betriebssystems, z. B. eines so genannten Linux-Betriebssystems, in den Speicherbereich 4 des USB-Sticks 2 kopiert bzw. dort hinterlegt hat. Ferner wird angenommen, dass der USB-Stick 2 aus dem USB-Anschluss des Laptops 1 entfernt und in einen USB-Anschluss eines Desktop-PCs 11 gesteckt wurde, was in der Zeichnung durch eine gestrichelte Linie angedeutet ist. Von diesem USB-Stick 2 ist das im Speicherbereich 4 hinterlegte Betriebssystem für diesen Desktop-PC 11 zu "booten" bzw. zu starten. Um dies zu bewerkstelligen, wählt der Anwender das diesem virtuellen USB-Stick bzw. diesem Speicherbereich 4 zugeordnete Piktogramm 9 aus, indem der Anwender dieses Piktogramm 9 berührt. Das Piktogramm 9 kann z. B. als Bild des bekannten "Linux-Pinguins" ausgebildet sein. Aufgrund dieser Berührung schaltet ein Programm oder eine Firmware-Routine des USB-Sticks 2 den Speicherbereich 4 für einen Zugriff durch den Desktop-PC 11 frei und das Betriebssystem wird für den Desktop-PC 11 gebootet. Die weiteren virtuellen USB-Sticks, also die Speicherbereiche 3 und 5 sind für den Desktop-PC 11 nicht zugänglich. Falls dort Daten hinterlegt sind, können diese daher nicht verloren gehen und auch nicht geändert werden.

## Patentansprüche

1. USB-Stick zum Anschließen an mit einer USB-Schnittstelle versehene elektronische Geräte (11), wobei der USB-Stick (2) einen Speicher (6) aufweist, **dadurch gekennzeichnet, dass** der USB-Stick (2) dazu ausgebildet ist,
- in einer Konfigurations-Betriebsart Bereiche (3, 4, 5) des Speichers (6) im USB-Stick (2) für verschiedene Anwendungen einzurichten und dem jeweiligen Bereich (3, 4, 5) eine vorgegebene Information (8, 9, 10) zum Darstellen auf einer Anzeige (7) des USB-Sticks (2) zuzuordnen und
- bei Auswahl einer der vorgegebenen Informationen (8, 9, 10) durch einen Bediener den dieser ausgewählten Information (8, 9, 10) zugeordneten Bereich (3, 4, 5) des Speichers (6) im USB-Stick (2) für einen Zugriff durch das jeweilige elektronische Gerät (11) freizuschalten.

2. USB-Stick nach Anspruch 1, **dadurch gekennzeichnet, dass** der USB-Stick (2) dazu ausgebildet ist, die Informationen in Form von Piktogrammen (8, 9, 10) darzustellen, und dass der USB-Stick (2) zum Darstellen und Auswählen der Piktogramme (8, 9, 10) einen Touch-Screen (7) aufweist.

## Claims

1. USB stick for connection to electronic devices (11) which are provided with a USB interface, wherein the USB stick (2) has a memory (6), **characterized in that** the USB stick (2) is designed
- to use a configuration mode of operation to set up areas (3, 4, 5) of the memory (6) in the USB stick (2) for different applications and to associate a prescribed piece of information (8, 9, 10) for presentation on a display (7) of the USB stick (2) with the respective area (3, 4, 5), and
- to respond to selection of one of the prescribed pieces of information (8, 9, 10) by an operator by enabling the area (3, 4, 5) of the memory (6) in the USB stick (2) which is associated with this selected piece of information (8, 9, 10) for access by the respective electronic device (11).

2. USB stick according to Claim 1, **characterized in that** the USB stick (2) is designed to present the information in the form of pictograms (8, 9, 10), and **in that** the USB stick (2) has a touch screen (7) for the presentation and selection of the pictograms (8, 9, 10)

## Revendications

1. Clé USB de raccordement à des appareils ( 11 ) électroniques munis d'une interface USB, la clé ( 2 ) USB ayant une mémoire ( 6 ), **caractérisée en ce que** la clé ( 2 ) USB est constituée pour
- dans un type de fonctionnement de configuration, établir des zones ( 3, 4, 5 ) de la mémoire ( 6 ) dans la clé ( 2 ) USB pour diverses applications et associer à chaque zone ( 3, 4, 5 ) une information ( 8, 9, 10 ) donnée à l'avance à représenter sur un affichage ( 7 ) de la clé ( 2 ) USB et
- lors de la sélection de l'une des informations ( 8, 9, 10 ) données à l'avance par un opérateur, libérer la zone ( 3, 4, 5 ) de la mémoire ( 6 ) dans la clé ( 2 ) USB associée à cette information ( 8, 9, 10 ) sélectionnée pour un accès par l'appareil ( 11 ) électronique respectif.

2. Clé USB suivant la revendication 1, **caractérisée en ce que** la clé ( 2 ) USB est constituée pour représenter les informations sous la forme de pictogrammes ( 8, 9, 10 ) et **en ce que** la clé ( 2 ) USB a un écran ( 7 ) tactile pour la représentation et la sélection des pictogrammes ( 8, 9, 10 ).
